# EUROPEAN PATENT SPECIFICATION

(11) **EP 3 917 711 B1**
(45) Date of publication and mention of the grant of the patent: **29.05.2024**
(21) Application number: 19818029.1
(22) Date of filing: 09.12.2019
(51) Int. Cl.: B23D 51/01, B27B 21/04, B23D 49/14

(54) **PORTABLE SAW**
TRAGBARE SÄGE
SCIE PORTATIVE

(30) Priority: 29.01.2019 DE 102019000595
(43) Date of publication of application: 08.12.2021
(73) Proprietor: HUSQVARNA AB, 561 82 Huskvarna (SE)
(72) Inventor: KISTLER, Michael, 89185 Hüttisheim (DE)
(74) Representative: Finkele, Rolf
(86) International application number: PCT/EP2019/084222
(87) International publication number: WO 2020/156712

(56) References cited:
- DE-A1- 1 502 991
- DE-A1-102008 026 065
- FR-A1- 2 695 054
- US-A- 3 114 402
- US-A1- 2004 093 745

## Description

### TECHNICAL FIELD

The present disclosure relates to a portable saw, and more particularly to an operational aspect of the portable saw.

### BACKGROUND

Generally, a handheld or portable saw, such as a gardening saw, may include a saw blade fixedly coupled to a handle. The handle may be used to hold the portable saw during a sawing operation. In many situations, the portable saw may be used in difficult to access or hard to reach locations, such as deep within bushes, raised locations above ground, and the like. In such a situation, it may be unergonomic and difficult for a user to complete the sawing operation with required precision and quality.

In some situations, the blade may be rotatably coupled to the handle via a rotating head. The rotating head may provide various working positions of the blade with respect to the handle. For example, FR2695054A1 discloses a universal tool holder with a hand grip to which various tools are fitted. The tool holder includes a fixing base rotatable about a primary axis on the handle and a multipurpose tool guide which can rotate about the secondary axis which is at right angles to the primary and is located on the fixing base. The pivoting fixtures can be provisionally blocked or released by the action of clamping screws to allow the mounting of a large variety of different tools with their orientation adjustable in relation to the handle.

However, an angular range of rotation of the rotating head may be limited, thus, providing limited working positions of the portable saw. Additionally, a mechanism to lock the rotating head in a required position with respect to the handle may be complicated, weak, and inefficient, thus, reducing usability, durability, and product quality.

Further, DE 10 2008 026 065 A1 discloses a portable saw according to the preamble of claim 1, in particular a hand-held power tool with a handle and a motor housing, which can be rotated relative to one another about a longitudinal axis of the hand-held power tool by a first radial bearing and a second radial bearing, and a fixing device for fixing the rotatable handle relative to the motor housing in at least two positions. The fixing device is mounted relative to the longitudinal axis in the radial direction and substantially centrally on the handle or on the motor housing. The locking mechanism comprises a locking slide which, in the locking position, engages one of the at least three recesses that are arranged in a second axial end region of the motor housing, wherein the second axial end region is positioned in the handle, when the motor housing is mounted to the handle.

However, a rigidity and a stability to the coupling mechanism is exclusively provided by the first radial bearing and the second radial bearing. Additionally, the described mechanism may be complicated, weak, and inefficient, thus reducing usability, durability and product quality.

### SUMMARY

In view of the above, it is an objective of the present invention to solve or at least reduce the drawbacks discussed above. The objective is at least partially achieved by a portable saw, according to an embodiment of the present invention. The portable saw includes a head portion. The head portion includes a first groove and a second groove. The second groove is disposed spaced apart with respect to the first groove. The head portion also includes a blade coupled to the head portion. The blade extends away from the head portion. The portable saw also includes a handle portion rotatably coupled to the head portion. The handle portion extends away from the head portion. The handle portion is disposed opposite with respect to the blade. The portable saw further includes a locking mechanism provided in association with each of the handle portion and the head portion. The locking mechanism is adapted to lock the head portion with respect to the handle portion in a first position and a second position. The locking mechanism is adapted to selectively slidably engage at least one of the first groove and the second groove provided in the head portion to lock the head portion with respect to the handle portion in the first position and the second position respectively. Further, a coupling mechanism is disposed between the head portion and the handle portion, wherein the coupling mechanism is adapted to rotatably couple the head portion with respect to the handle portion, wherein the coupling mechanism includes an extension portion provided in the head portion, and a receiving portion provided in the handle portion, the receiving portion adapted to rotatably receive the extension portion. The coupling mechanism further includes a central pin disposed in association with each of the head portion and the handle portion, wherein the central pin is adapted to rotatably couple the head portion with respect to the handle portion. As such, the head portion may be rotated and used in any of the first position and the second position, thus, providing flexibility and ease of use. Also, the locking mechanism provides locking of the head portion in a required position, thus, providing stability of the head portion and the blade with respect to the handle portion during use.

According to an embodiment of the present invention, the head portion rotates in an angular range with respect to the handle portion between the first position and the second position. The angular range is selected from at least one or more of 30 degrees, 45 degrees, 60 degrees, 90 degrees, 120 degrees, and 150 degrees. It is understood that the angular range is not limited to these exemplary mentioned angular ranges before, but could encompass any angular position in-between 0 degree and 180 degree. As such, the portable saw includes multiple angular positions, thus, providing multiple working positions, improved flexibility, and ease of use.

According to an embodiment of the present invention, the first groove is disposed opposite with respect to the second groove. As such, the head portion is adapted to rotate in an angular range with respect to the handle portion between the first position and the second position. Accordingly, location of the first groove and the second groove provides improved angular range of 180 degree, thus, improving flexibility and ease of use.

According to an embodiment of the present invention, the locking mechanism is adapted to lock the head portion with respect to the handle portion in at least one intermediate position between the first position and the second position.

According to an embodiment of the present invention, the locking mechanism includes a slider element disposed in the handle portion. The slider element is adapted to selectively slidably move between an engaged position and a disengaged position. The locking mechanism also includes a spring element provided in contact with the slider element. The spring element is disposed in the handle portion. The spring element is adapted to bias the slider element in the engaged position. The slider element and the spring element provide a simple and easy to use locking mechanism in order to lock and unlock the head portion and the blade with respect to the handle portion during use.

According to an embodiment of the present invention, the slider element is adapted to selectively slidably engage one of the first groove and the second groove in the engaged position. As such, the slider element provides a simple sliding mechanism to engage the first groove or the second groove in order to lock and unlock the head portion with respect to the handle portion during use.

According to an embodiment of the present invention, the slider element is adapted to be moved by a finger of a user holding the handle portion. As such, the slider element provides a single-handed operation of the locking mechanism in order to lock and unlock the head portion with respect to the handle portion during use.

According to an embodiment of the present invention, the spring element is one of a compression spring and a bent strip. As such, the spring element may be easily and readily available, thus, reducing costs and complexity.

According to an embodiment of the present invention, the portable saw includes a coupling mechanism. The coupling mechanism is disposed between the head portion and the handle portion, the coupling mechanism is adapted to rotatably couple the head portion with respect to the handle portion. The coupling mechanism provides a rugged and durable mechanism to rotatably couple the head portion with respect to the handle portion, thus, improving product reliability.

According to an embodiment of the present invention, the coupling mechanism includes an extension portion provided in the head portion. The coupling mechanism also includes a receiving portion provided in the handle portion. The receiving portion is adapted to rotatably receive the extension portion. The extension portion and the receiving portion provides a rugged and durable mechanism to rotatably couple the head portion with respect to the handle portion, thus, improving serviceability and product life.

According to an embodiment of the present invention, each of the extension portion and the receiving portion has a substantially circular configuration. The circular configuration of each of the extension portion and the receiving portion reduces structural complexity and, thus, costs.

According to an embodiment of the present invention, each of the extension portion and the receiving portion is axially aligned with respect to a longitudinal axis of the head portion. As such, each of the extension portion and the receiving portion may be easily assembled with respect to one another, thus, reducing manufacturing and/or operational complexity.

According to the present invention, the coupling mechanism includes a central pin. The central pin is disposed in association with each of the head portion and the handle portion. The central pin is adapted to rotatably couple the head portion with respect to the handle portion. The central pin provides rigidity and stability to the coupling mechanism, thus, improving product life and reducing costs.

According to the present invention, the central pin is axially aligned with respect to a longitudinal axis of the head portion. As such, the central pin may be easily assembled with respect to each of the extension portion and the receiving portion, thus, reducing manufacturing and/or operational complexity.

According to an embodiment of the present invention, the central pin is disposed centrally within each of the extension portion provided in the head portion and the receiving portion provided in the handle portion. As such, the central pin may be easily assembled with respect to each of the extension portion and the receiving portion, thus, reducing manufacturing and/or operational complexity

According to an embodiment of the present invention, the blade is removably coupled to the head portion using at least one fastening element. As such, the blade may be easily replaced as may be required, by disassembling the at least one fastening element, thus, improving serviceability and ease of use.

According to an embodiment of the present invention, the blade is axially aligned with respect to the longitudinal axis of the head portion. As such, a cutting force applied by the user via the handle portion may be optimally transferred to the blade, thus, reducing cutting effort and user fatigue.

According to an embodiment of the present invention, the handle portion is disposed at an angle with respect to the longitudinal axis of the head portion. As such, a cutting force applied by the user via the handle portion may be optimally transferred to the blade, thus, reducing cutting effort and user fatigue

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a portable saw, in accordance with an embodiment of the present invention;
**FIG. 2** shows a partial cross-sectional perspective view of the portable saw of **FIG. 1****,** in accordance with an embodiment of the present invention;
**FIG. 3** shows another perspective view of the portable saw of **FIG. 1****,** in accordance with an embodiment of the present invention;
**FIG. 4** shows a partial cross-sectional perspective view of the portable saw of **FIG. 3****,** in accordance with an embodiment of the present invention;
**FIG. 5** shows another perspective view of the portable saw of **FIG. 1****,** in accordance with an embodiment of the present invention;
**FIG. 6** shows yet another perspective view of the portable saw of **FIG. 1****,** in accordance with an embodiment of the present invention; and
**FIG. 7** shows a partial cross-sectional perspective view of the portable saw of **FIG. 6****,** in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", "clockwise", "counterclockwise", or the like, merely describe the configuration shown in the Figures. Indeed, the components may be oriented in any direction and the terminology, therefore, should be understood as encompassing such variations unless specified otherwise.

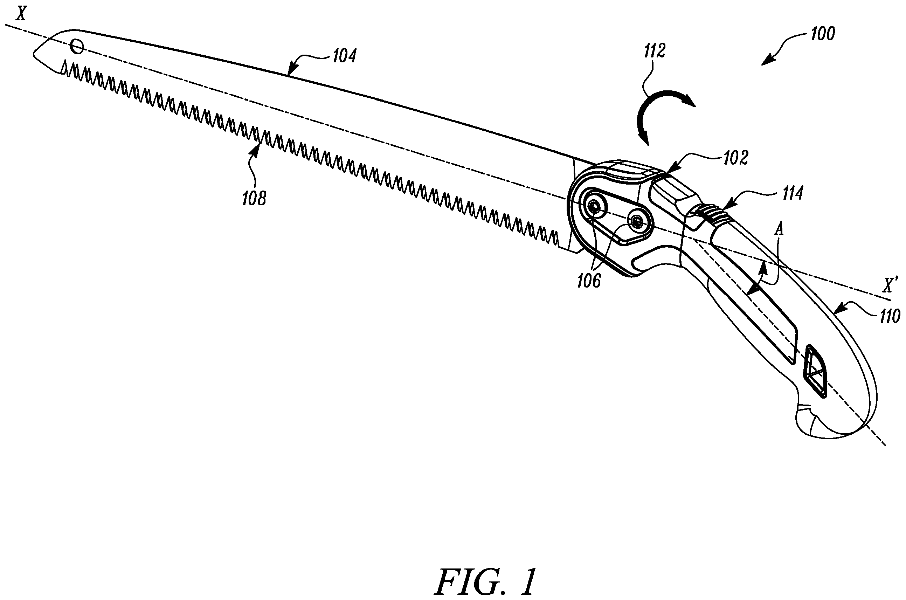

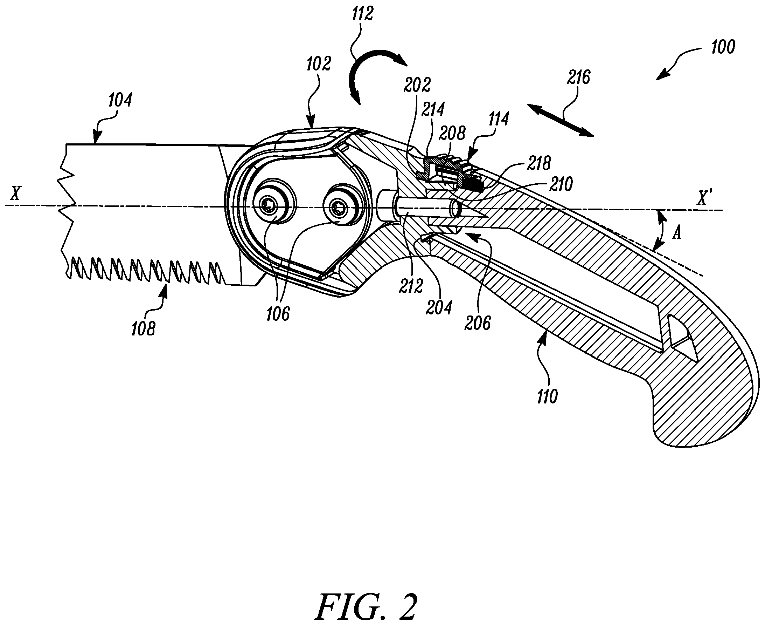

Referring to **FIG. 1****,** a perspective view of a portable saw **100** in a first position is illustrated. Referring to **FIG. 2****,** a partial cross-sectional perspective view of the portable saw **100** in the first position is illustrated. The portable saw **100** will be hereinafter interchangeably referred to as the "saw **100**"**.** The saw **100** may be employed to perform various industrial and/or domestic cutting functions by hand, such as gardening, carpentry, construction, and the like. The saw **100** may be easily carried around by a user, thus, providing portability and ease of use to the user. The saw **100** will now be explained in detail with combined reference to **FIGS. 1** and **2****.**

The saw **100** includes a head portion **102.** The head portion **102** defines a longitudinal axis **X-X'.** The head portion **102** also includes a first groove **202** and a second groove **204.** The second groove **204** is disposed spaced apart and opposite with respect to the first groove **202.** The first groove **202** and the second groove **204** will be explained in more detail later. The head portion **102** may be manufactured using any material, such as polymer, metal, alloy, and the like. The head portion **102** may be manufactured using any manufacturing process, such as casting, forging, molding, machining, fabrication, additive manufacturing, and the like.

The saw **100** also includes a blade **104.** The blade **104** extends away from the head portion **102.** In the illustrated embodiment, the blade **104** is axially aligned with respect to the longitudinal axis X-X'. In other embodiments, the blade **104** may be inclined at an angle with respect to the longitudinal axis X-X'. The blade **104** is removably coupled to the head portion **102.** In the illustrated embodiment, the blade **104** is coupled to the head portion **102** using one or more fastening elements **106,** such as screws, bolts, rivets, and the like. In other embodiments, the blade **104** may be coupled to the head portion **102** using any other fastening method, such as interlocking surfaces. In the illustrated embodiment, the blade **104** includes a corrugated type cutting edge **108.** In other embodiments, the blade **104** may include a sharpened type cutting edge **108.** The blade **104** may be manufactured using any material, such as metal and/or alloy.

The saw **100** also includes a handle portion **110.** The handle portion **110** extends away from the head portion **102.** More specifically, the handle portion **110** is disposed opposite with respect to the blade **104.** In the illustrated embodiment, the handle portion **110** is inclined at an angle **"A"** with respect to the longitudinal axis **X-X'.** An actual value of the angle **"A"** may vary based on application requirements, such as between 1 degree (°) and 90°. In other embodiments, the handle portion **110** may be axially aligned with respect to the longitudinal axis **X-X',** such that the angle **"A"** may measure approximately 0°.

The handle portion **110** is rotatably coupled to the head portion **102.** Accordingly, each of the head portion **102** and the blade **104** is adapted to rotate in a clockwise and/or counterclockwise direction with respect to the head portion 102 about the longitudinal axis **X-X',** as shown by an arrow **112.** The handle portion **110** may be manufactured using any material, such as polymer, metal, alloy, and the like. The handle portion **110** may be manufactured using any manufacturing process, such as casting, forging, molding, machining, fabrication, additive manufacturing, and the like

Referring to **FIG. 2****,** the saw **100** includes a coupling mechanism **206.** The coupling mechanism **206** is disposed between the head portion **102** and the handle portion **110.** The coupling mechanism **206** is adapted to rotatably couple the head portion **102** with respect to the handle portion **110.** The coupling mechanism **206** includes an extension portion **208.** The extension portion **208** is provided in the head portion **102.** The extension portion **208** is disposed opposite the blade **104.** The extension portion **208** includes a substantially circular configuration. Also, the extension portion **208** is axially aligned with respect to the longitudinal axis **X-X'.**

The coupling mechanism **206** also includes a receiving portion **210.** The receiving portion **210** is provided in the handle portion **110.** The receiving portion **210** includes a substantially circular configuration. The receiving portion **210** is axially aligned with respect to the longitudinal axis **X-X'.** The receiving portion **210** is adapted to rotatably receive the extension portion **208.** Accordingly, the extension portion **208** rotates with respect to the receiving portion **210** along the longitudinal axis **X-X',** as shown by the arrow **112,** during rotation of the head portion **102** with respect to the handle portion **110.**

It should be noted that location of the extension portion **208** and the head portion **102** described herein is merely exemplary and may vary, based on application requirements. As such, location of the extension portion **208** and the receiving portion **210** may be interchanged. More specifically, in other embodiments, the extension portion **208** may be interchangeably provided on the handle portion **110.** Accordingly, in such a situation, the receiving portion **210** may be interchangeably provided on the head portion **102.**

The coupling mechanism **206** also includes a central pin **212.** The central pin **212** is disposed in association with each of the head portion **102** and the handle portion **110.** The central pin **212** is axially aligned with respect to the longitudinal axis **X-X'.** Also, the central pin **212** is disposed centrally within each of the extension portion **208** and the receiving portion **210.** The central pin **212** is adapted to rotatably couple the head portion **102** with respect to the handle portion **110.** Also, the central pin **212** is adapted to provide rigidity to the coupling mechanism **206** in association with the extension portion **208** and the receiving portion **210.** The central pin **212** may be manufactured using any material, such as polymer, metal, alloy, and the like.

It should be noted that, in some embodiments, the central pin **212** may be affixed with respect to the head portion **102** and may be movably coupled with respect to the handle portion **110.** In some embodiments, the central pin **212** may be movably coupled with respect to the head portion **102** and may be affixed with respect to the handle portion **110.** In yet some embodiments, the central pin **212** may be movably coupled with respect to each of the head portion **102** and the handle portion **110.**

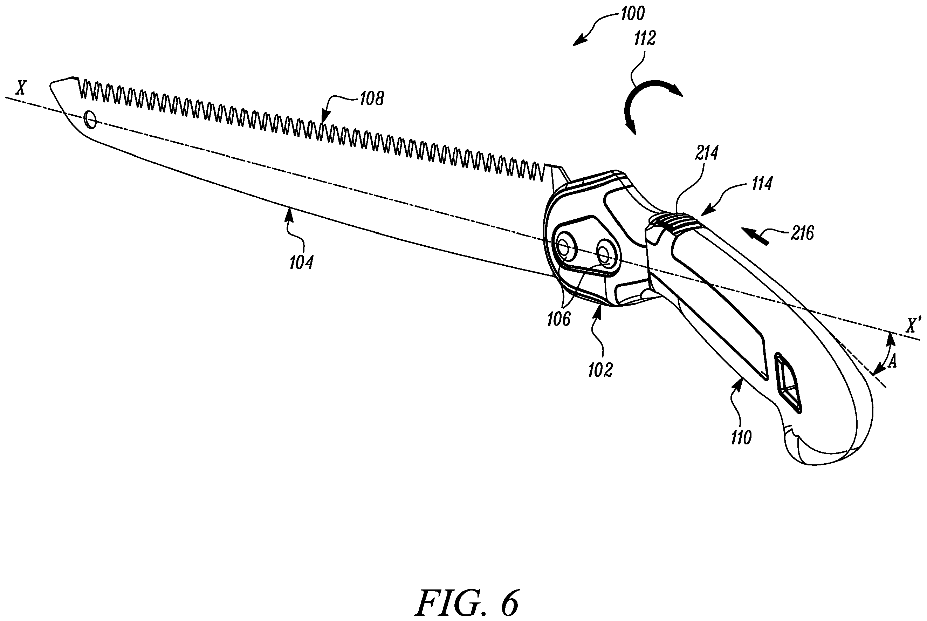

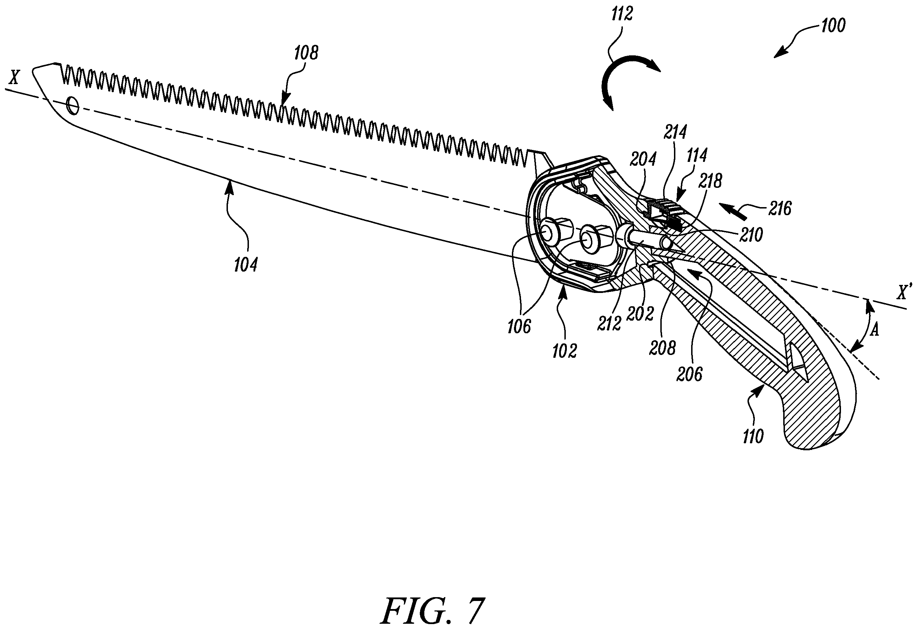

Referring to **FIGS. 1** and **2****,** the saw **100** further includes a locking mechanism **114.** The locking mechanism **114** is provided in association with each of the handle portion **110** and the head portion **102.** The locking mechanism **114** is adapted to lock the head portion **102** with respect to the handle portion **110** in the first position and a second position (shown in **FIGS. 6** and **7**). More specifically, the locking mechanism **114** is adapted to selectively slidably engage at least one of the first groove **202** and the second groove **204** to lock the head portion **102** with respect to the handle portion **110** in the first position and the second position respectively.

The head portion **102** is adapted to rotate in an angular range with respect to the handle portion **110** about the longitudinal axis **(X-X')** between the first position and the second position. In the illustrated embodiment, the first groove **202** is disposed substantially opposite with respect to the second groove **204.** Accordingly, the angular range between the first position and the second position is approximately 180°. The angular range may be selected from one or more of 30 degrees, 45 degrees, 60 degrees, 90 degrees, 120 degrees, and 150 degrees. As such, the portable saw includes multiple angular positions, thus, providing multiple working positions, improved flexibility, and ease of use.

Additionally, in other embodiments, the saw **100** may include one or more intermediate positions between the first position and the second position. The locking mechanism 114 may be designed such as to lock the saw 100 in at least one intermediate position between the first position and the second position. Thus, the saw 100 may have various intermediate configurations between the first position and the second position.

The locking mechanism **114** includes a slider element **214.** The slider element **214** is disposed in the handle portion **110** and in association with the head portion **102.** The slider element **214** is adapted to selectively slidably move between an engaged position and a disengaged position, as shown by an arrow **216.** More specifically, the slider element **214** is adapted to move between the engaged position and the disengaged position by a finger of a user holding the handle portion **110.** Accordingly, in the engaged position, the slider element **214** is adapted to selectively slidably engage with respect to one of the first groove **202** and the second groove **204.** Also, in the disengaged position, the slider element **214** is adapted to selectively slidably disengage with respect to one of the first groove **202** and the second groove **204.**

The locking mechanism **114** also includes a spring element **218.** The spring element **218** is disposed in the handle portion **110.** The spring element **218** is provided in contact with the slider element **214.** The spring element **218** is adapted to bias the slider element **214** in the engaged position. In the illustrated embodiment, the spring element **218** is a compression spring. In other embodiments, the spring element **218** may be any resilient element, such as a bent strip.

In the accompanying **FIGS. 1** and **2****,** the head portion **102** is shown in a 0° position with respect to the handle portion **110.** The slider element **214** is shown in the engaged position, such that the slider element **214** is engaged with respect to the first groove **202** in order to lock the head portion **102** with respect to the handle position in the 0° position. During rotation of the head portion **102** from the first position to the second position, the slider element **214** is moved to the disengaged position, as shown by the arrow **216.** The slider element **214** may be moved by the finger of the user, thus, providing single handle operation of the locking mechanism **114.** As such, the slider element **214** is disengaged with respect to the first groove **202.**

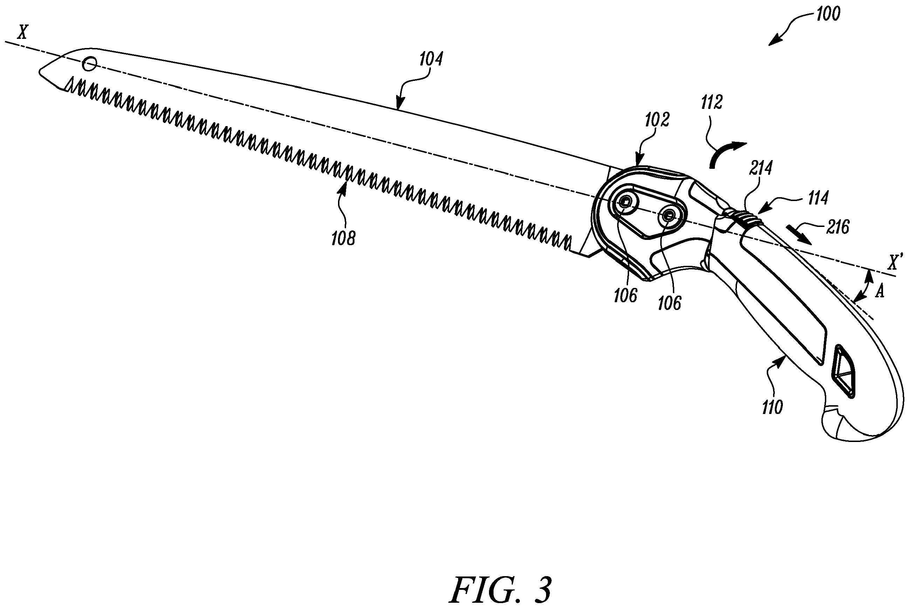

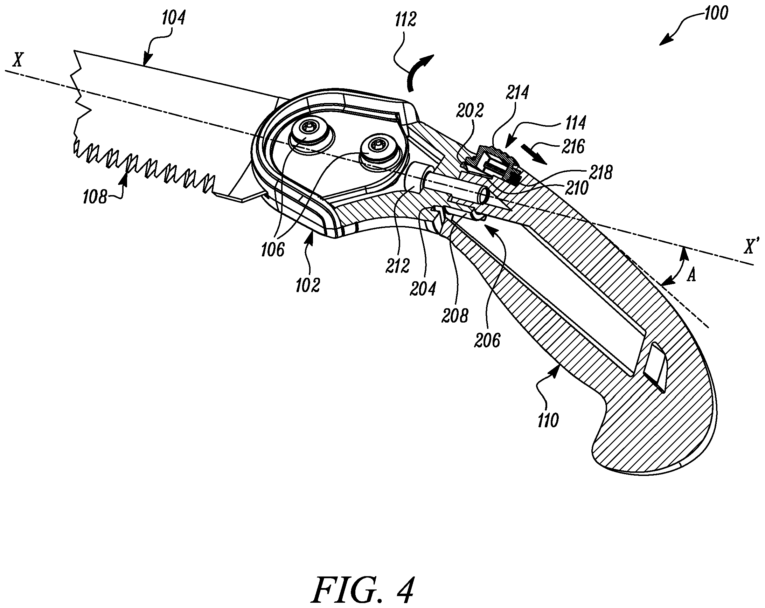

Referring to **FIG. 3****,** a perspective view of the saw in an intermediate position is illustrated. Referring to **FIG. 4****,** a partial cross-sectional perspective view of the saw in the intermediate position is illustrated. Referring to **FIGS. 3** and **4****,** the head portion **102** is rotated in a clockwise direction with respect to the handle portion **110** about the longitudinal axis **X-X',** as shown by the arrow **112.** A position of the head portion **102** shown in the accompanying figures corresponds to approximately 30° clockwise rotation of the head portion **102** with respect to the handle portion **110.** In some embodiments, the head portion **102** may include a first intermediate groove (not shown) provided at the 30° clockwise position. The first intermediate groove may have a configuration similar to a configuration of the first groove **202** and/or the second groove **204.** In such a situation, the slider element **214** may be biased by the spring element **218** in the first intermediate groove in order to lock the head portion **102** and the blade **104** in the 30° clockwise position with respect to the handle portion **110.**

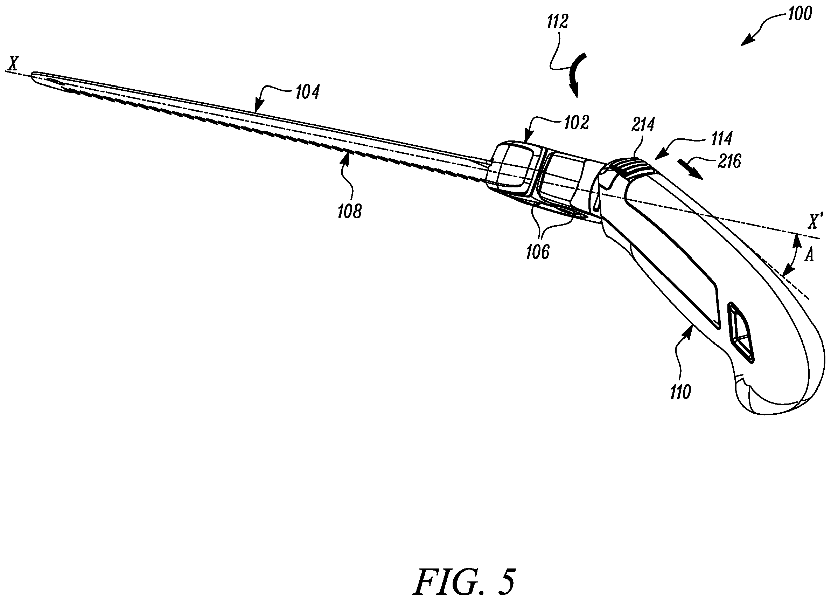

Referring to **FIG. 5****,** a perspective view of the saw in another intermediate position is illustrated. The head portion **102** is rotated in a counterclockwise direction with respect to the handle portion **110** about the longitudinal axis **X-X',** as shown by the arrow **112.** A position of the head portion **102** shown in the accompanying figures corresponds to approximately 60° counterclockwise rotation of the head portion **102** with respect to the handle portion **110.** In some embodiments, the head portion **102** may include a second intermediate groove (not shown) provided at the 60° counterclockwise position. The second intermediate groove may have a configuration similar to a configuration of the first groove **202** and/or the second groove **204.** In such a situation, the slider element **214** may be biased by the spring element **218** in the second intermediate groove in order to lock the head portion **102** and the blade **104** in the 60° counterclockwise position with respect to the handle portion **110.**

Referring to **FIG. 6****,** a perspective view of the saw in the second position is illustrated. Referring to **FIG. 7****,** a partial cross-sectional perspective view of the saw in the second position is illustrated. Referring to **FIGS. 6** and **7****,** the head portion **102** is rotated in any of the clockwise or counterclockwise direction with respect to the handle portion **110** about the longitudinal axis **X-X',** as shown by the arrow **112.** A position of the head portion **102** shown in the accompanying figures corresponds to approximately 180° rotation of the head portion **102** with respect to the handle portion **110.** The slider element **214** is then released by the user, such that the slider element **214** is biased by the spring element **218** in the second groove **204,** as shown by the arrow **216.** As such, the slider element **214** engages with respect to the second groove **204** in order to lock the head portion **102** and the blade **104** in the 180° position with respect to the handle portion **110.**

It should be noted that the 0° position, the 30° clockwise position, the 60° counterclockwise position, and the 180° position described in the accompanying figures is merely exemplary and may vary, based on application requirements. In other embodiments, the saw **100** may be adapted to rotate in any of the clockwise and/or counterclockwise direction and in any angular range between 0° and 180°, such as 45°, 90°, 120°, and 150°, and the like. Also, the head portion **102** may include multiple intermediate grooves provided on the head portion **102** corresponding to the various angular positions in order to lock the head portion **102** with respect to the handle position at the required angular position using the locking mechanism **114.**

The saw **100** provides a simple, efficient, and cost-effective sawing tool to perform sawing operation by hand by the user. The saw **100** includes the blade **104** coupled to the handle portion **110** via the rotatable head portion **102.** As such, the blade **104** may be angularly oriented in any position with respect to the handle portion **110.** Accordingly, the saw **100** provides multiple working positions to the user, in turn, improving ergonomics. The head portion **102** may also be locked in a desired position by the user via the locking mechanism **114,** in turn, limiting rotational movement of the blade **104** and the head portion **102** with respect to the handle portion **110** during the sawing operation. Further, the locking mechanism **114** may be operated by the finger of the user, in turn, providing single-handed operation of the saw **100** and improving usability.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Portable Saw / Saw
- **102**: Head Portion
- **104**: Blade
- **106**: Fastening Element
- **108**: Cutting Edge
- **110**: Handle Portion
- **112**: Arrow
- **114**: Locking Mechanism
- **202**: First Groove
- **204**: Second Groove
- **206**: Coupling Mechanism
- **208**: Extension Portion
- **210**: Receiving Portion
- **212**: Central Pin
- **214**: Slider Element
- **216**: Arrow
- **218**: Spring Element
- **X-X'**: Longitudinal Axis
- **A**: Angle

## Claims

1. A portable saw **(100)** comprising:
a head portion **(102)** including at least a first groove **(202)** and a second groove **(204),** the second groove **(204)** disposed spaced apart with respect to the first groove **(202);**
a blade **(104)** coupled to the head portion **(102),** the blade **(104)** extending away from the head portion **(102);**
a handle portion **(110)** to be used to hold the portable saw during sawing operation and rotatably coupled to the head portion **(102),** the handle portion **(110)** extending away from the head portion **(102),** the handle portion **(110)** disposed opposite with respect to the blade **(104);** and
a locking mechanism **(114)** adapted to lock the head portion **(102)** with respect to the handle portion **(110)** in at least a first position and a second position, wherein the locking mechanism **(114)** is adapted to selectively slidably engage at least one of the first groove **(202)** and the second groove **(204)** provided in the head portion **(102)** to lock the head portion **(102)** with respect to the handle portion **(110)** in the first position and the second position respectively, and wherein the locking mechanism **(114)** includes a spring element that is in contact with a slider element **(214)** to bias the same in an engaged position, where the locking mechanism **(114)** selectively slidably engage at least one of the first groove **(202)** and the second groove **(204)** provided in the head portion **(102),**
wherein the locking mechanism **(114)** is provided in association with each of the handle portion **(110)** and the head portion **(102),** and
where the locking mechanism **(114)** includes:
the slider element **(214)** adapted to selectively slidably move between an engaged position and a disengaged position;
a coupling mechanism **(206)** disposed between the head portion **(102)** and the handle portion **(110),**
wherein the coupling mechanism **(206)** is adapted to rotatably couple the head portion **(102)** with respect to the handle portion **(110);**
wherein the coupling mechanism **(206)** includes:
an extension portion **(208)** provided in the head portion **(102);** and
a receiving portion **(210)** provided in the handle portion **(110),** the receiving portion **(210)** adapted to rotatably receive the extension portion **(208);** wherein the locking mechanism **(114)** is disposed, at least partially, in the handle portion **(110),** so that the slider element **(214)** is adapted to slidably move between an engaged position and a disengaged position by a finger of a user holding the handle portion **(110);**
**characterized in that:**
the coupling mechanism **(206)** further includes a central pin **(212)** disposed in association with each of the head portion **(102)** and the handle portion **(110),** and wherein the central pin **(212)** is adapted to rotatably couple the head portion **(102)** with respect to the handle portion (110), wherein the central pin (212) is axially aligned with respect to a longitudinal axis (X-X') of the head portion (102).

2. The portable saw **(100)** of claim 1,
wherein the head portion **(102)** is adapted to rotate in an angular range with respect to the handle portion **(110)** between the first position and the second position.

3. The portable saw **(100)** of claim 2,
wherein the angular range is selected from at least one or more of 30 degrees, 45 degrees, 60 degrees, 90 degrees, 120 degrees, 150 degrees, and 180 degrees.

4. The portable saw **(100)** of any one of the preceding claims,
wherein the first groove **(202)** is disposed opposite with respect to the second groove **(204)** such that the head portion **(102)** is adapted to rotate in the angular range with respect to the handle portion **(110)** between the first position and the second position.

5. The portable saw **(100)** of any one of the preceding claims,
wherein the locking mechanism **(114)** is adapted to lock the head portion **(102)** with respect to the handle portion **(110)** in at least one intermediate position between the first position and the second position.

6. The portable saw **(100)** of any one of the preceding claims,
wherein the slider element **(214)** is adapted to selectively slidably engage with respect to one of the first groove **(202)** and the second groove **(204)** in the engaged position.

7. The portable saw **(100)** according to any one of the preceding claims, wherein each of the extension portion **(208)** and the receiving portion **(210)** is axially aligned with respect to a longitudinal axis **(X-X')** of the head portion **(102).**

8. The portable saw **(100)** according to any one of the preceding claims, wherein the central pin **(212)** is disposed centrally within each of the extension portion **(208)** provided in the head portion **(102)** and the receiving portion **(210)** provided in the handle portion **(110).**

9. The portable saw **(100)** of any one of the preceding claims,
wherein the blade **(104)** is removably coupled to the head portion **(102)** using at least one fastening element **(106).**

10. The portable saw **(100)** of any one of the preceding claims,
wherein the blade **(104)** is axially aligned with respect to a longitudinal axis **(X-X')** of the head portion **(102).**

11. The portable saw **(100)** of any one of the preceding claims,
wherein the handle portion **(110)** is disposed at an angle **(A)** with respect to a longitudinal axis **(X-X')** of the head portion **(102).**

## Patentansprüche

1. Tragbare Säge **(100),** umfassend:
einen Kopfabschnitt **(102),** der mindestens eine erste Nut **(202)** und eine zweite Nut **(204)** einschließt, wobei die zweite Nut **(204)** in Bezug auf die erste Nut **(202)** beabstandet angeordnet ist;
eine Klinge **(104),** die mit dem Kopfabschnitt **(102)** gekoppelt ist, wobei sich die Klinge **(104)** von dem Kopfabschnitt **(102)** weg erstreckt;
einen Griffabschnitt **(110),** der dazu dient, die tragbare Säge während eines Sägevorgangs zu halten, und der mit dem Kopfabschnitt **(102)** drehbar gekoppelt ist, wobei sich der Griffabschnitt **(110)** von dem Kopfabschnitt **(102)** weg erstreckt, wobei der Griffabschnitt **(110)** in Bezug auf die Klinge **(104)** gegenüberliegend angeordnet ist; und
einen Verriegelungsmechanismus **(114),** der angepasst ist, um den Kopfabschnitt **(102)** in Bezug auf den Griffabschnitt **(110)** in mindestens einer ersten Position und einer zweiten Position zu verriegeln, wobei der Verriegelungsmechanismus **(114)** angepasst ist, um mindestens eine der ersten Nut **(202)** und der zweiten Nut **(204),** die in dem Kopfabschnitt **(102)** bereitgestellt sind, wahlweise gleitend in Eingriff zu nehmen, um den Kopfabschnitt **(102)** in Bezug auf den Griffabschnitt **(110)** in der ersten Position beziehungsweise der zweiten Position zu verriegeln, und wobei der Verriegelungsmechanismus **(114)** ein Federelement einschließt, das in Kontakt mit einem Gleitelement **(214)** steht, um dasselbe in einer Eingriffsposition vorzuspannen, wobei der Verriegelungsmechanismus **(114)** mindestens eine der ersten Nut **(202)** und der zweiten Nut **(204),** die in dem Kopfabschnitt **(102)** bereitgestellt sind, wahlweise gleitend in Eingriff nimmt,
wobei der Verriegelungsmechanismus **(114)** in Verbindung mit jedem des Griffabschnitts **(110)** und des Kopfabschnitts **(102)** bereitgestellt ist, und
wobei der Verriegelungsmechanismus **(114)** einschließt:
das Gleitelement **(214),** das angepasst ist, um sich zwischen einer eingegriffenen Position und einer gelösten Position wahlweise gleitend zu bewegen;
einen Kopplungsmechanismus **(206),** der zwischen dem Kopfabschnitt **(102)** und dem Griffabschnitt **(110)** angeordnet ist,
wobei der Kopplungsmechanismus **(206)** angepasst ist, um den Kopfabschnitt **(102)** in Bezug auf den Griffabschnitt **(110)** drehbar zu koppeln;
wobei der Kopplungsmechanismus **(206)** einschließt:
einen Verlängerungsabschnitt **(208),** der in dem Kopfabschnitt **(102)** bereitgestellt ist; und
einen Aufnahmeabschnitt **(210),** der in dem Griffabschnitt **(110)** bereitgestellt ist, wobei der Aufnahmeabschnitt **(210)** angepasst ist, um den Verlängerungsabschnitt **(208)** drehbar aufzunehmen; wobei der Verriegelungsmechanismus **(114)** mindestens teilweise in dem Griffabschnitt **(110)** so angeordnet ist, dass das Gleitelement **(214)** angepasst ist, um sich durch einen Finger eines Benutzers, der den Griffabschnitt **(110)** hält, zwischen einer eingegriffenen Position und einer gelösten Position gleitend zu bewegen;
**dadurch gekennzeichnet, dass:**
der Kopplungsmechanismus **(206)** ferner einen zentralen Stift **(212)** einschließt, der in Verbindung mit jedem des Kopfabschnitts **(102)** und des Griffabschnitts **(110)** angeordnet ist, und wobei der zentrale Stift **(212)** angepasst ist, um den Kopfabschnitt **(102)** in Bezug auf den Griffabschnitt **(110)** drehbar zu koppeln, wobei der zentrale Stift **(212)** in Bezug auf eine Längsachse **(X-X')** des Kopfabschnitts **(102)** axial ausgerichtet ist.

2. Tragbare Säge **(100)** nach Anspruch 1,
wobei der Kopfabschnitt **(102)** angepasst ist, um sich in einem Winkelbereich in Bezug auf den Griffabschnitt **(110)** zwischen der ersten Position und der zweiten Position zu drehen.

3. Tragbare Säge **(100)** nach Anspruch 2,
wobei der Winkelbereich aus mindestens einem oder mehreren von 30 Grad, 45 Grad, 60 Grad, 90 Grad, 120 Grad, 150 Grad und 180 Grad ausgewählt ist.

4. Tragbare Säge **(100)** nach einem der vorstehenden Ansprüche,
wobei die erste Nut **(202)** in Bezug auf die zweite Nut **(204)** derart gegenüberliegend angeordnet ist, dass der Kopfabschnitt **(102)** angepasst ist, um sich in dem Winkelbereich in Bezug auf den Griffabschnitt **(110)** zwischen der ersten Position und der zweiten Position zu drehen.

5. Tragbare Säge **(100)** nach einem der vorstehenden Ansprüche,
wobei der Verriegelungsmechanismus **(114)** angepasst ist, um den Kopfabschnitt **(102)** in Bezug auf den Griffabschnitt **(110)** in mindestens einer Zwischenposition zwischen der ersten Position und der zweiten Position zu verriegeln.

6. Tragbare Säge **(100)** nach einem der vorstehenden Ansprüche,
wobei das Gleitelement **(214)** angepasst ist, um in der eingegriffenen Position in Bezug auf eine der ersten Nut **(202)** oder der zweiten Nut **(204)** wahlweise gleitend in Eingriff zu kommen.

7. Tragbare Säge **(100)** nach einem der vorstehenden Ansprüche,
wobei jeder des Verlängerungsabschnitts **(208)** und des Aufnahmeabschnitts **(210)** in Bezug auf eine Längsachse **(X-X')** des Kopfabschnitts **(102)** axial ausgerichtet sind.

8. Tragbare Säge **(100)** nach einem der vorstehenden Ansprüche,
wobei der zentrale Stift **(212)** innerhalb jedes des Verlängerungsabschnitts **(208),** der in dem Kopfabschnitt **(102)** bereitgestellt ist, und des Aufnahmeabschnitts **(210),** der in dem Griffabschnitt **(110)** bereitgestellt ist, zentral angeordnet ist.

9. Tragbare Säge **(100)** nach einem der vorstehenden Ansprüche,
wobei die Klinge **(104)** mit dem Kopfabschnitt **(102)** unter Verwendung mindestens eines Befestigungselements **(106)** entfernbar gekoppelt ist.

10. Tragbare Säge **(100)** nach einem der vorstehenden Ansprüche,
wobei die Klinge **(104)** in Bezug auf eine Längsachse **(X-X')** des Kopfabschnitts **(102)** axial ausgerichtet ist.

11. Tragbare Säge **(100)** nach einem der vorstehenden Ansprüche,
wobei der Griffabschnitt **(110)** in einem Winkel **(A)** in Bezug auf eine Längsachse **(X-X')** des Kopfabschnitts **(102)** angeordnet ist.

## Revendications

1. Scie portative **(100)** comprenant :
une partie tête **(102)** comportant au moins une première rainure **(202)** et une seconde rainure **(204),** la seconde rainure **(204)** étant disposée à distance par rapport à la première rainure **(202)** ;
une lame **(104)** accouplée à la partie tête **(102),** la lame **(104)** s'étendant à l'écart de la partie tête **(102)** ;
une partie poignée **(110)** destinée à être utilisée pour tenir la scie portative pendant l'opération de sciage et accouplée en rotation à la partie tête **(102),** la partie poignée **(110)** s'étendant à l'écart de la partie tête **(102),** la partie poignée **(110)** étant disposée à l'opposé par rapport à la lame **(104)** ; et
un mécanisme de verrouillage **(114)** adapté pour verrouiller la partie tête **(102)** par rapport à la partie poignée **(110)** dans au moins une première position et une seconde position, dans laquelle le mécanisme de verrouillage **(114)** est adapté pour venir en prise de manière sélective et coulissante avec au moins l'une parmi la première rainure **(202)** et la seconde rainure **(204)** pourvues dans la partie tête **(102)** pour verrouiller la partie tête **(102)** par rapport à la partie poignée **(110)** dans la première position et la seconde position respectivement, et dans laquelle le mécanisme de verrouillage **(114)** comporte un élément ressort qui est en contact avec un élément coulissant **(214)** pour solliciter celui-ci dans une position en prise, où le mécanisme de verrouillage **(114)** vient en prise de manière sélective et coulissante avec au moins l'une parmi la première rainure **(202)** et la seconde rainure **(204)** pourvues dans la partie tête **(102),**
dans laquelle le mécanisme de verrouillage **(114)** est pourvu en association avec chacune de la partie poignée **(110)** et de la partie tête **(102),** et
où le mécanisme de verrouillage **(114)** comporte :
l'élément coulissant **(214)** adapté pour se déplacer de manière sélective et coulissante entre une position en prise et une position désolidarisée ;
un mécanisme d'accouplement **(206)** disposé entre la partie tête **(102)** et la partie poignée **(110),**
dans laquelle le mécanisme d'accouplement **(206)** est adapté pour accoupler de manière rotative la partie tête **(102)** par rapport à la partie poignée **(110) ;**
dans laquelle le mécanisme d'accouplement **(206)** comporte :
une partie d'extension **(208)** pourvue dans la partie tête **(102)** ; et
une partie de réception **(210)** pourvue dans la partie poignée **(110),** la partie de réception **(210)** étant adaptée pour recevoir de manière rotative la partie d'extension **(208)** ; dans laquelle le mécanisme de verrouillage **(114)** est disposé, au moins partiellement, dans la partie poignée **(110),** de sorte que l'élément coulissant **(214)** est adapté pour se déplacer de manière coulissante entre une position en prise et une position désolidarisée par un doigt d'un utilisateur tenant la partie poignée **(110)** ;
**caractérisée en ce que** :
le mécanisme d'accouplement **(206)** comporte en outre une goupille centrale **(212)** disposée en association avec chacune de la partie tête **(102)** et de la partie poignée **(110),** et dans laquelle la goupille centrale **(212)** est adaptée pour accoupler de manière rotative la partie tête **(102)** par rapport à la partie poignée **(110),** dans laquelle la goupille centrale **(212)** est alignée axialement par rapport à un axe longitudinal **(X-X')** de la partie tête **(102).**

2. Scie portative **(100)** selon la revendication 1,
dans laquelle la partie tête **(102)** est adaptée pour tourner dans une plage angulaire par rapport à la partie poignée **(110)** entre la première position et la seconde position.

3. Scie portative **(100)** selon la revendication 2,
dans laquelle la plage angulaire est sélectionnée parmi au moins un ou plusieurs parmi 30 degrés, 45 degrés, 60 degrés, 90 degrés, 120 degrés, 150 degrés et 180 degrés.

4. Scie portative **(100)** selon l'une quelconque des revendications précédentes,
dans laquelle la première rainure **(202)** est disposée à l'opposé par rapport à la seconde rainure **(204)** de telle sorte que la partie tête **(102)** est adaptée pour tourner dans la plage angulaire par rapport à la partie poignée **(110)** entre la première position et la seconde position.

5. Scie portative **(100)** selon l'une quelconque des revendications précédentes,
dans laquelle le mécanisme de verrouillage **(114)** est adapté pour verrouiller la partie tête **(102)** par rapport à la partie poignée **(110)** dans au moins une position intermédiaire entre la première position et la seconde position.

6. Scie portative **(100)** selon l'une quelconque des revendications précédentes,
dans laquelle l'élément coulissant **(214)** est adapté pour venir en prise de manière sélective et coulissante par rapport à l'une parmi la première rainure **(202)** et la seconde rainure **(204)** dans la position en prise.

7. Scie portative **(100)** selon l'une quelconque des revendications précédentes,
dans laquelle chacune de la partie d'extension **(208)** et de la partie de réception **(210)** est alignée axialement par rapport à un axe longitudinal **(X-X')** de la partie tête **(102).**

8. Scie portative **(100)** selon l'une quelconque des revendications précédentes,
dans laquelle la goupille centrale **(212)** est disposée de manière centrale à l'intérieur de chacune de la partie d'extension **(208)** pourvue dans la partie tête **(102)** et de la partie de réception **(210)** pourvue dans la partie poignée **(110).**

9. Scie portative **(100)** selon l'une quelconque des revendications précédentes,
dans laquelle la lame **(104)** est accouplée de manière amovible à la partie tête **(102)** au moyen d'au moins un élément de fixation **(106).**

10. Scie portative **(100)** selon l'une quelconque des revendications précédentes,
dans laquelle la lame **(104)** est alignée axialement par rapport à un axe longitudinal **(X-X')** de la partie tête **(102).**

11. Scie portative **(100)** selon l'une quelconque des revendications précédentes,
dans laquelle la partie poignée **(110)** est disposée selon un angle **(A)** par rapport à un axe longitudinal **(X-X')** de la partie tête **(102).**
